# EUROPÄISCHE PATENTSCHRIFT

(11) **EP 1 843 079 B1**
(45) Veröffentlichungstag und Bekanntmachung des Hinweises auf die Patenterteilung: **15.02.2017**
(21) Anmeldenummer: 07003444.2
(22) Anmeldetag: 19.02.2007
(51) Int. Cl.: H01L 25/075, H01L 33/60, H01L 33/64, A61C 13/15

(54) **Halbleiter-Strahlungsquelle sowie Lichthärtgerät**
Semiconductor light source and light curing apparatus
Source semi-conductrice de lumière et appareil de photo-durcissement

(30) Priorität: 03.04.2006 DE 102006015377
(43) Veröffentlichungstag der Anmeldung: 10.10.2007
(73) Patentinhaber: Ivoclar Vivadent AG, 9494 Schaan (LI)
(72) Erfinder: Plank, Wolfgang, A-6830 Rankweil (AT); Senn, Bruno, CH-9470 Buchs (CH)
(74) Vertreter: Baronetzky, Klaus

(56) Entgegenhaltungen:
- EP-A- 0 509 389
- WO-A-2005/067063
- DE-A1-102005 028 176
- DE-U1- 20 007 730
- JP-A- 2002 336 275
- US-A- 5 130 761
- US-A1- 2002 177 099
- US-A1- 2004 218 390
- US-B1- 6 331 111

## Beschreibung

Die Erfindung betrifft eine Halbleiter-Strahlungsquelle, gemäß dem Oberbegriff von Anspruch 1.

Bei einer derartigen Halbleiter-Strahlungsquelle ist es bereits vorgeschlagen worden, mindestens zwei LED-Chips zentral auf einem Kühlkörper zu lagern und über eine gemeinsame Sammellinse die Lichtabgabe der LED-Chips zu bündeln. Die Lichtabgabe ist besonders effizient, wenn die LED-Chips eng benachbart dem Brennpunkt der Linse angeordnet sind. Durch eine derartige eng benachbarte Anordnung wird neben der hohen Lichtleistung eine erhebliche Wärmeleistung dort erzeugt. Hierzu ist es längst bekannt, Kühlkörper einzusetzen, um die Wärmeleistung abzuführen. Für die Lichtausbeute ist es entscheidend, dass hier eine gute Kühlung vorgenommen, um dem Betriebstemperaturbereich der LED-Chips nicht zu überschreiten.

Gerade energiereiche LED-Chips müssen für ein zuverlässiges Funktionieren abgedichtet aufbewart werden. Um dies zu erreichen, ist es seit langem bekannt, die LED-Chip in Kunststoffkörpern zu vergießen. Dies bedingt jedoch eine vorgegebene Form eines Linsenkörpers. In vielen Fällen wäre es wünschenswert, anstelle der üblichen Vergußmasse ein Material mit höherem Brechungsindex zu verwenden, so dass eine separate Linse erwünscht ist. Beispielsweise kann eine derartige Linse aus einem hochbrechendem Kunststoff oder Glas bestehen. Diese Linse sollte jedoch andererseits, nachdem es sich um ein optisches Präzisionsbauteil handelt, nicht zu großen Wärmeschwankungen unterworfen werden, damit sie sich nicht verformt oder eintrübt.

Um eine gute Wärmeableitung zu gewährleisten, ist es bekannt geworden, den Raum zwischen Linse und Chip über eine Flüssigkeit zu füllen. Gegenüber einer Luftbefüllung ist hiermit eine wesentlich verbesserte Wärmeableitung möglich. Hintergrund ist, dass die Flüssigkeit aufgrund von Konvektionen zwischen der vergleichsweise kühlen Kühlkörperoberfläche und den LED-Chips strömt, so dass ein Wärmeaustausch erzielt wird.

Bei einer Flüssigkeitsfüllung muss jedoch Sorge getragen werden, dass eine sichere Abdichtung für den Raum zwischen Linse und Chip gewährleistet ist. Diese Abdichtung ist vergleichsweise aufwändig, denn typischerweise muss auch berücksichtigt werden, dass sich die Flüssigkeit durch die Erwärmung ausdehnt. Die entstehenden Probleme sind umso größer, je größer die von den LED-Chips erzeugte Verlustwärme ist, während andererseits gerade Hochleistungschips recht viel Wärmestrahlung abgeben.

Um die Wärme besser ableiten zu können, ist es bereits vorgeschlagen worden, eine Vielzahl von LED-Chips verteilt anzubringen. Zwar lässt sich auch hierdurch eine recht hohe Gesamt-Lichtleistung bereitstellen. Die Bündelung des Lichtstrahls ist - gerade bei Einleitung in einen Lichtleiter - jedoch erheblich aufwändiger, und es ist auch erforderlich, eine Vielzahl von einzelnen LED-Chips - je mit den entsprechenden Ansprüchen - zu montieren. Die Einzelchip-Ausfallwahrscheinlichkeit, also die Wahrscheinlichkeit, dass einer der Chips ausfällt, ist wesentlich höher und die Konstruktion wird insgesamt wesentlich schwerer, was gerade bei Handgeräten unerwünscht ist. Gerade bei Handgeräten ist der zur Verfügung stehende Raum für die Bereitstellung der LED-Chips ausgesprochen begrenzt. Andererseits wäre es wünschenswert, ausreichend Platz für die Anschlüsse und gegebenenfalls auch für.Vorwiderstände für den Abgleich bzw. die Kalibrierung der LED-Chips bereitzustellen, aber dennoch ist eine gute Wärmeableitung über den Basiskörper, hingegen eine Wärmeabschirmung nach vorne hin zu sorgen.

Die Offenlegungsschrift DE 10 2005 028 176 A1 offenbart eine Leuchtdiode mit einer Basis, die hohe Wärmeleitfähigkeit und eine Montagefläche zum Bonden aufweist, und mit einer Platine, die auf der Basis montiert ist und die ein Loch zum Freilegen eines Teils der Montagefläche der Basis und einen vorspringenden Abschnitt aufweist. Ein Leuchtdiode-Element ist auf der im Loch der Platine freiliegenden Montagefläche der Basis angebracht. Diese Leuchtdiode verbessert die Wärmeabführungswirkung, so dass Licht mit hoher Leuchtkraft erzeugt werden kann.

Das Gebrauchtsmusterschrift DE 200 07 730 U1 offenbart eine Vorrichtung mit einer lichtemittierenden Diode, die ein wärmeableitendes Substrat, einen lichtemittierenden Diodenchip, eine Leiterplatte, eine chipschützende Epoxidschicht, eine Linsenschicht und eine Positionierungsschicht aufweist. Durch eine zweckmässige Kombination des wärmeableitendes Substrats mit der darauf sich befindenden Leiterplatte wird eine Vorrichtung mit niedrigem Wärmewiderstand geschaffen.

Die Dokumente US 2002/0177099 A1 und US 6,331,111 B1 offenbaren Lichthärtgeräte mit einer Halbleiter-Strahlungsquelle.

Daher liegt der Erfindung die Aufgabe zu Grunde, eine Halbleiter-Strahlungsquelle gemäß dem Oberbegriff von Anspruch 1 zu schaffen, die hinsichtlich des Verhältnisses zwischen der Lichteffizienz und der Verlustleistungsabführung verbessert ist, ohne das die Gefahr bestände, dass vor der Halbleiter-Strahlungsquelle angeordnete Bauteile stark erwärmt werden.

Diese Aufgabe wird erfindungsgemäß durch Anspruch 1 gelöst. Vorteilhafte Weiterbildungen ergeben sich aus den Unteransprüchen.

Erfindungsgemäß sind die LED-Chips in dichter Packung, also angrenzend aneinander - gegebenenfalls unter Zwischenschaltung von sehr kompakten Reflektorelementen - in einem zentralen Bereich des Basiskörpers angeordnet. Hierunter ist ein mittlerer Bereich des Basiskörpers zu verstehen, der sich beispielsweise über etwa das mittlere Drittel oder weniger, beispielsweise auch über das mittlere Fünftel, des Basiskörpers erstreckt. Dies erlaubt zunächst, ausreichend Platz für Leiterbahnen für die stabile und temperaturfeste mechanische Anschlußbereitstellung, sowie gegebenenfalls für Vorwiderstände, zu belassen. Zudem ermöglicht diese zentrale Anordnung, nahezu den gesamten Bereich, beispielsweise 90% der Fläche, des Basiskörpers mit einer Printplatte zu versehen. Die Printplatte hat hier die Doppelfunktion, die Anschlussleitungen möglichst eng an die LED-Chips heranzuführen, um geeignete Anschlussflächen, insbesondere für Bondverbindungen, bereitzustellen. Zudem dient sie der Wärmedämmung und schützt damit die thermisch empfindliche Optik vor der Anstrahlung des vergleichsweise heißen Basiskörpers, der so besonders effizient für die Ableitung der Wärme der LED-Chips benutzt werden kann. Die Printplatte wirkt insofern wie eine Art Mantel und deckt praktisch die gesamte Fläche des Basiskörpers, abgesehen von der Fläche, die von den LED-Chips eingenommen wird, so wie gegebenenfalls von den sehr kleinen Reflektorelementen, ab.

Die Reflektorelemente können so klein sein, dass jedes Reflektorelement beispielsweise lediglich ein Zehntel der Fläche jedes LED-Chips einnimmt, wobei die LED-Chips ohnehin sehr klein sind. Dies ermöglicht überraschend einen besonders guten Schutz der Linse und weiterer empfindlicher optischer Bauteile, und zwar überraschend auch gegenüber dezentral aufgebauten Chips, bei denen insofern mehrere punktförmige Wärmequellen verteilt strahlen.

Überraschend hat sich die in besonders günstiger Ausgestaltung der erfindungsgemäßen Halbleiter-Strahlungsquelle vorgesehene fingerförmige Teilabdeckung von LED-Chips radial belegten Bereich als besonders wirksam herausgestellt. Hierdurch lassen sich einerseits die Arischlussflächen für das Bonden besonders nahe an die Chips heranführen, aber andererseits ergibt sich auch eine besonders gute Wärmedämmung an sehr heißen Bereichen des Basiskörpers.

Eine kreuzförmige oder sternförmige Anordnung der LED-Chips begünstigt diese bevorzugt Ausgestaltung, bei der dann die seitlichen Freiflächen, also die Flächen, die sich bei Betrachtung von der Seite neben einem äußeren LED-Chip erstrecken, vollständig oder zumindest im Wesentlichen vollständig von der Printplatte abgedeckt sind. Bei quadratischen LED-Chips ist eine kreuzweise Anordnung der Chips bevorzugt, so dass sich insgesamt vier seitliche Freiflächen - je zwischen den Schenkeln des Kreuzes erstrecken, aber auch eine sternförmige Anordnung, beispielsweise eines Sterns mit drei, fünf oder sechs Schenkeln erlaubt die Bereitstellung seitlicher Freiflächen, die dann von einer Printplatte abgedeckt werden.

Diese Ausgestaltung steht der Kompaktanordnung mit guter Fokussierbarkeit der abgegebenen Lichtstrahlung mit einer einzigen Linse nicht entgegen. Besonders günstig ist es in diesem Zusammenhang, wenn die Linse über einen Abstandshalter abgestützt ist, der seinerseits auf der Printplatte gelagert ist, so dass auch der Abstandshalter selbst sich auf einem geringeren Temperaturniveau befindet.

Besonders günstig ist es in diesem Zusammenhang, wenn die LED-Chips so dicht aneinander angrenzen, dass die Breite zwischen ihnen weniger als ein Fünftel, insbesondere etwa ein Zehntel, des Durchmessers jedes LED-Chips beträgt.

Erfindungsgemäß besonders günstig ist es auch, wenn durch ein eng an einen Einzelchip angrenzendes Reflektorelement, das in seiner Höhe auf die Höhe des LED-Chips beschränkt sein kann, das dort austretende Strahlungsmaximum ausgenutzt und nach vorne reflektiert werden kann. Dies erlaubt es auch, einen Abstand zwischen einem sich vor den LED-Chips erstreckenden Parabol-Reflektor oder Reflektorkegel in Richtung der optischen Achse vorzunehmen und insofern auch die Einleitung der Wärmestrahlung auch auf den optischen Reflektor zu reduzieren, ohne dass Emissionsstrahlung verloren ginge. Bevorzugt ist es in diesem Zusammenhang, wenn die abgegebene Lichtstrahlung zurächst die vor den LED-Chips angeordnete gemeinsame Abdecklinse durchtritt und erst dann auf den Parabol-Reflektor fallen kann. Dies erlaubt es, den größten Teil der abgegebenen Lichtstrahlung bereits vorab zu bündeln und zu fokussieren, so dass auch eine etwaige Verschmutzung des Reflektors sich weniger stark auswirken würde.

In erfindungsgemäß besonders günstiger Ausgestaltung ist es vorgesehen, dass ein für die Linse vor den LED-Chips vorgesehener Abstandshalter im Wesentlichen ringförmig ausgestaltet ist, wobei sich die Leiterbahnen der Printplatte unter dem Abstandshalter hindurch erstrecken. Dies ermöglicht einerseits ein einfaches Bonden, wobei die Bonddrähte nach Anbringung des Abstandshalters und der Linse gut geschützt sind, aber andererseits eine leichte Kontaktierung nach außen.

Die erfindungsgemäße Printplatte kann aus einem beliebigen geeigneten wärmedämmenden Material bestehen, beispielsweise aus Epoxidharz, aber auch aus einem anderen hierfür geeigneten Kunststoff oder auch aus Keramik.

Erfindungsgemäß ist es vorgesehen, dass die Printplatte in Freiflächen hineinragt, die sich seitlich neben den Chips erstrecken.

In einer weiteren vorteilhaften Ausgestaltung ist es vorgesehen, dass die Printplatte bis neben die Chips verläuft, jedoch nicht zwischen Chips und optischer Achse der Strahlungsquelle. In einer weiteren vorteilhaften Ausgestaltung ist es vorgesehen, dass ein erster LED-Chip in einer optischen Achse angeordnet ist und eine Mehrzahl von mehreren LED-Chips, insbesondere symmetrisch zueinander und den LED-Chip nach der Art eines Kreuzes oder Sternes umgebend, radial außerhalb des ersten LED-Chips angeordnet sind.

In einer weiteren vorteilhaften Ausgestaltung ist es vorgesehen, dass vier weitere LED-Chips den ersten LED-Chip umgeben.

Erfindungsgemäß ist es vorgesehen, dass die LED-Chips in dem zentralen Bereich des Basiskörpers, einander benachbart, also ohne Printplatte zwischen ihnen, angeordnet sind.

Erfindungsgemäß ist es vorgesehen, dass die Printplatte die LED-Chips umgibt.

In einer weiteren vorteilhaften Ausgestaltung ist es vorgesehen, dass die LED-Chips und die Printplatte im Wesentlichen die gleiche Höhe aufweisen.

In einer weiteren vorteilhaften Ausgestaltung ist es vorgesehen, dass insbesondere über Bondverbindungen Anschlußflächen von Leiterbahnen der Printplatte mit den LED-Chips verbunden sind.

In einer weiteren vorteilhaften Ausgestaltung ist es vorgesehen, dass die LED-Chips, ggf. über einen thermisch leitfähigen Kleber, unmittelbar auf dem Basiskörper gelagert sind und die Printplatte auf dem Basiskörper insbesondere aufgeklebt ist.

In einer weiteren vorteilhaften Ausgestaltung ist es vorgesehen, dass die Printplatte eine Epoxidharzbasis aufweist und wenigstens auf einer Seite mindestens eine Leiterbahn aufweist und insbesondere mit Kupfer beschichtet sowie durchkontaktiert ist.

In einer weiteren vorteilhaften Ausgestaltung ist es vorgesehen, dass die LED-Chips auf einem zentralen Vorsprung des Basiskörpers angeordnet sind, dessen Höhe im Wesentlichen der Höhe der Printplatte entspricht.

In einer weiteren vorteilhaften Ausgestaltung ist es vorgesehen, dass mindestens zwischen zwei einander benachbarten LED-Chips ein Reflektorelement angeordnet ist, das sich an dem Basiskörper, und/oder der Printplatte und/oder den LED-Chips, insbesondere auch an dem Basiskörper, abstützt.

In einer weiteren vorteilhaften Ausgestaltung ist es vorgesehen, dass ein sich zwischen zwei LED-Chips erstreckendes Reflektorelement zwei im Wesentlichen schräg verlaufende Reflexionsflächen aufweist, wobei jede Reflexionsfläche aus dem benachbarten LED-Chip stammende Strahlung reflektiert.

In einer weiteren vorteilhaften Ausgestaltung ist es vorgesehen, dass die Reflexionsflächen in Richtung der optischen Achse betrachtet sich im Wesentlichen entsprechend der Höhe der Printplatte erstrecken oder die Printplatteüberragen.

In einer weiteren vorteilhaften Ausgestaltung ist es vorgesehen, dass Reflexionsflächen leicht konkav oder parabolisch ausgestaltet sind und dass das Reflektorelement einen im Wesentlichen dreieckigen Querschnitt, insbesondere im Wesentlichen eines gleichschenkligen Dreiecks, aufweist.

In einer weiteren vorteilhaften Ausgestaltung ist es vorgesehen, dass mehrere Reflektorelemente unter Bildung eines Gitterreflektors miteinander verbunden sind.

In einer weiteren vorteilhaften Ausgestaltung ist es vorgesehen, dass die LED-Chips in dem Gitterreflektor aufgenommen sind und dass sich der Gitterreflektor an dem Basiskörper und/oder der Printplatte und/oder den LED-Chips abstützt.

In einer weiteren vorteilhaften Ausgestaltung ist es vorgesehen, dass sich Reflektorelemente zwischen den seitlichen Freiflächen und den LED-Chips erstrecken und dort insbesondere die LED-Chips abstützen.

In einer weiteren vorteilhaften Ausgestaltung ist es vorgesehen, dass sich zwischen LED-Chips, insbesondere zwischen äußeren LED-Chips, und der Printplatte Strahlungsabsorber erstrecken, die insbesondere mit dem Basiskörper in Wärmeleitverbindungen miteinander verbunden sind.

In einer weiteren vorteilhaften Ausgestaltung ist es vorgesehen, dass die Strahlungsabsorber zugleich wärmedämmend ausgebildet sind und insbesondere aus Keramik bestehen.

In einer weiteren vorteilhaften Ausgestaltung ist es vorgesehen, dass die Strahlungsabsorber sich mindestens über die Breite der LED-Chips erstrecken und insbesondere eine größere Höhe als die LED-Chips aufweisen, bevorzugt etwa die 1,5 bis 5-face Höhe und besonders bevorzugt etwa die zweifache Höhe der LED-Chips.

In einer weiteren vorteilhaften Ausgestaltung ist es vorgesehen, dass eine Abdecklinse im Strahlengang nach den LED-Chips angeordnet ist und ein Abstandshalter für diese im Wesentlichen rohr- oder ringförmig ausgebildet ist, und dass der Abstandshalter mindestens teilweise auf der Printplatte und/oder dem Basiskörper abgestützt ist.

In einer weiteren vorteilhaften Ausgestaltung ist es vorgesehen, dass mindestens eine Leiterbahn der Printplatte unter einem Abstandshalter hindurch verläuft und insbesondere von außerhalb des Abstandshalters nach innerhalb des Abstandshalters verläuft.

In einer weiteren vorteilhaften Ausgestaltung ist es vorgesehen, dass sich zwischen den LED-Chips, dem Abstandshalter und der Abdecklinse ein geschlossener Raum erstreckt, der eine durchsichtige oder durchscheinende, flüssige oder gelförmige Substanz, insbesondere Silikongel oder eine Vergußmasse, aufweist.

In einer weiteren vorteilhaften Ausgestaltung ist es vorgesehen, dass die Substanz Phosphorpartikel aufweist.

In einer weiteren vorteilhaften Ausgestaltung ist es vorgesehen, dass im Strahlengang nach einer Abdecklinse eine Sammellinse angeordnet ist, deren Durchmesser insbesondere größer als der Durchmesser der Abdecklinse ist.

In einer weiteren vorteilhaften Ausgestaltung ist es vorgesehen, dass von den LED-Chips beabstandet vor diesen, also im Strahlengang nach diesen, und/oder insbesondere auch im Strahlengang nach einer Abdecklinse, ein Reflektor angeordnet ist.

In einer weiteren vorteilhaften Ausgestaltung ist es vorgesehen, dass im Strahlengang nach dem Reflektor ein Lichtleiter angeordnet ist.

In einer weiteren vorteilhaften Ausgestaltung ist es vorgesehen, dass auf der Printplatte, außerhalb des Abstandshalters insbesondere abgleichbare Vorwiderstände angeordnet sind, die für die Abgleichung frei zugänglich sind.

In einer weiteren vorteilhaften Ausgestaltung ist es vorgesehen, dass der erste LED-Chip und die weiteren LED-Chips Licht mit unterschiedlichen Wellenlängen ausstrahlen, insbesondere einerseits mit 400 bis 430 nm und andererseits mit 450 bis 480 nm.

In einer weiteren vorteilhaften Ausgestaltung ist es vorgesehen, dass der erste Chip und die weiteren Chips gleichzeitig oder zu unterschiedlichen Zeitpunkten einschaltbar und ausschaltbar sind.

In einer weiteren vorteilhaften Ausgestaltung ist es vorgesehen, dass der erste LED-Chip Licht mit 400 bis 430 nm und die weiteren LED-Chips Licht mit 450 bis 480 nm ausstrahlen.

In einer weiteren vorteilhaften Ausgestaltung ist es vorgesehen, dass das Lichthärtgerät als Handgerät mit einem Griff ausgebildet ist.

In einer weiteren vorteilhaften Ausgestaltung ist es vorgesehen, dass dass das Lichthärtgerät ein Gehäuse aufweist, an dem die Sammellinse abgestützt ist..

Weitere Einzelheiten Vorteile und Merkmale ergeben sich aus der nachfolgenden Beschreibung mehrerer Ausführungsbeispiele der Erfindung anhand der Zeichnung.

Es zeigen:
- Fig. 1: Eine schematische Ansicht eines Details einer erfindungsgemäßen Halbleiter-Strahlungsquelle;
- Fig. 2: eine Draufsicht auf ein weiteres Detail einer Ausführungsform einer erfindungsgemäßen Halbleiter-Strahlungsquelle;
- Fig. 3: einen Schnitt durch eine Halbleiter-Strahlungsquellle;
- Fig. 4: einen Schnitt durch eine weitere Ausführungsform einer Halbleiter-Strahlungsquelle;
- Fig. 5: eine Draufsicht auf die Halbleiter-Strahlungsquelle in der Ausführungsform gemäß Fig. 4;
- Fig. 6: einen Schnitt durch die erfindungsgemäße Halbleiter-Strahlungsquelle in einer weiteren Ausführungsform;
- Fig. 7: eine Draufsicht auf die Ausführungsform gemäß Fig. 6; und
- Fig. 8 eine: Draufsicht auf einen Teils einer erfindungsgemäßen Strahlungsquelle; und
- Fig. 9: einen Schnitt durch die Ausführungsform gemäß Fig. 8.

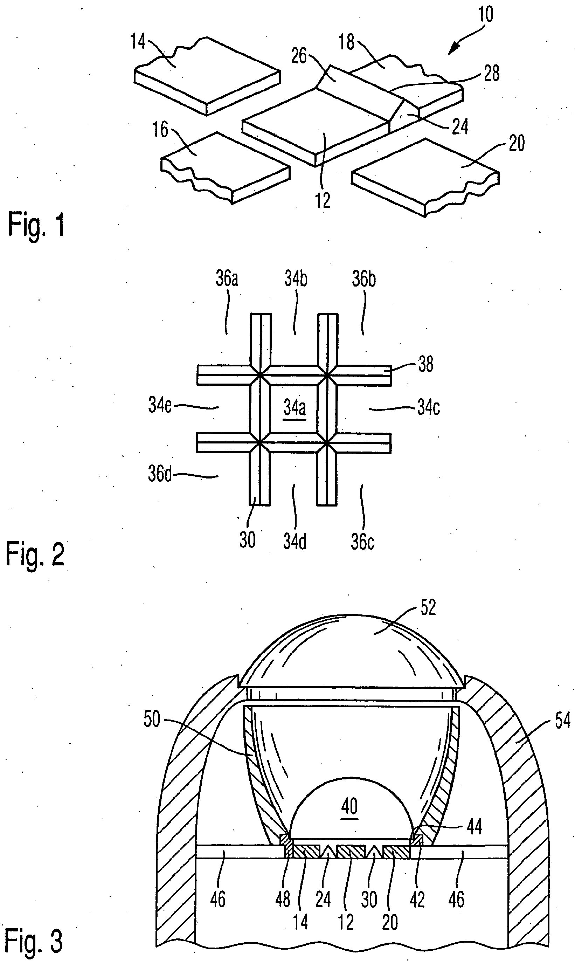

Die in Fig. 1 teilweise dargestellte Halbleiter-Strahlungsquelle 10 weist eine Mehrzahl von LED-Chips auf, in dem dargestellten Ausführungsbeispiel einen mittig angeordneten Chip 12 und vier je sich entlang seiner Seitenkanten erstreckende Chips 14, 16, 18 und 20. Die Chips sind auf einem Basiskörper 22 angebracht, der aus Metall besteht und zugleich als Montagebasis und als Kühlkörper. Der Basiskörper besteht bevorzugt wenigstens teilweise aus Kupfer und/oder ist wenigstens teilweise mit Gold oder Nickel-Gold beschichtet. Die Aufbringung erfolgt mit einem geringen Wärmewiderstand zwischen den Chips und dem Basiskörper 22, so dass auch eine hohe Wärmeleistung abführbar ist.

Zwischen dem mittigen Chip 12 und den benachbarten Chips 14 bis 20 ist je ein Reflektorelement 24 angeordnet, das in der Seitenansicht einen im Wesentlichen dachförmigen Aufbau hat. Das Reflektorelement 24 erstreckt sich angrenzend an die je benachbarten Seitenflächen der LED-Chips 18 und 12 und dient der Reflektion der an über die Seitenflächen austretenden Strahlung der LED-Chips. Die Reflexionsflächen 26 und 28 erstrecken sich etwa im Winkel von 45° gegenüber der Oberfläche des Basiskörpers 22, so dass schräg aus dem Chip 12 bzw. 18 austretende Strahlung schräg nach vorne reflektiert wird. Die Reflexion folgt bekanntermaßen dem Grundsatz Einfallswinkel gleich Ausfallwinkel, so dass die betreffende Strahlung regelmäßig schräg nach vorne fällt. Vor den LED-Chips ist eine Abdecklinse 40 angeordnet, die die Strahlung bündelt und vor der Abdecklinse ein Reflektor .50, der noch seitlich austretende Strahlung weiter fokussiert, damit sie einem noch weiter vor den LED-Chips angeordneten Eintrittsende eines Lichtleiters zugeleitet werden kann.

Es versteht sich, dass der Schrägstellungswinkel der Reflexionflächen 26 und 28 in weiten Bereichen an die Erfordernisse anpassbar ist. Eine stärkere Fokussierung für die Hauptstrahlung ergibt sich durch einen Schrägstellungswinkel von beispielsweise 60° gegenüber der Oberfläche des Basiskörpers 22, wobei dann gewisse Anteile der austretenden Strahlung riickreflektiert werden, also über die optische Achse der Abdecklinse hinaus auf die gegenüberliegende Seite reflektiert werden, was im Grunde nicht erwünscht ist.

In den dargestellten Ausführungsbeispielen ist die Höhe jedes Reflektorelements wesentlich höher als die Höhe eines Chips. Es versteht sich, dass auch diese Höhe in weiten Bereichen an die Erfordernisse anpassbar ist, beispielsweise von dem einfachen bis zum dreifachen oder sogar fünffachen der Höhe des Chips betragen kann.

Die Reflektorelemente 24 wirken zugleich auch als Abstandshalter zwischen den LED-Chips. Sie können auch an allen vier Seitenkanten beispielsweise des Chips 12 vorgesehen sein; auch eine Gitterstruktur gemäß dem Gitterreflektor 30, wie sie aus Fig. 2 ersichtlich ist, ist besonders günstig, nachdem hierdurch auch die Montage der Chips vereinfacht werden kann. Die Reflektorelemente 24 sind bei dieser Lösung zu dem Gitterreflektor 30 zusammengefasst. Jeder Steg des Gitters weist daher den entsprechenden dachförmigen Querschnitt auf, also im Wesentlichen den Querschnitt eines gleichschenkligen Dreiecks, je von der Seite betrachtet, und die Stege erstrecken sich kreuzweise zueinander, wie es aus Fig. 2 ersichtlich ist. Hierdurch sind Freiflächen belassen, wobei in der Ausgestaltung gemäß Fig. 2 in den Freiflächen 34a, 34b, 34c, 34d und 34e je ein LED-Chip aufgenommen ist - entsprechend den LED-Chips 12 bis 20 aus Fig. 1 -, während die Freiflächen 36a, 36b, 36c und 36d, die sich seitlich neben den Chips befinden, frei auch von Chips sind. Es ist bevorzugt, dass dort die Printplatte hineinragt, die der Bereitstellung von Anschlussflächen für die LED-Chips dient. Diese bevorzugte Ausgestaltung erlaubt es, die Printplatte einerseits recht nahe an die Chips heranzuführen, was für das Bonden günstig ist, aber andererseits eine kompakte Chipanordnung zu gewährleisten, die aus optischen Gründen günstig ist.

Es versteht sich, dass im Grunde an die Freiflächen 36a bis 36d angrenzend keine Schrägflächen des Reflektorelements 24 vorgesehen sein müssen, denn dort wird keine Strahlung abgegeben. Insofern ist es ausreichend, wenn dort die Breite der Gitterstruktur 30 halbiert ist, also sich lediglich einseitig Schrägflächen je zu den benachbarten Chip hin erstrecken. Aus Gründen der einfacheren Fertigung und auch aus Gründen der besseren Stabilität der Finger des Gitterreflektors 30 kann dennoch eine je zugehörige Reflexionsfläche vorgesehen sein. Beispielsweise kann jeder LED-Chip eine Kantenlänge von 1,5 mm aufweisen, so dass die Breite jedes Fingers 38 der Gitterstruktur beispielsweise 0,5 mm betragen kann. Eine Gitterstruktur mit Fingerbreiten,von 0,5 mm lässt sich aber wesentlich besser handhaben als eine Giltterstruktur einer Fingerbreite von 0,25 mm.

Erfindungsgemäß besonders günstig ist es, dass der Abstand zwischen den einzelnen LED-Chips weniger als 1/5, insbesondere etwa 1/10, des Durchmessers jedes LED-Chips beträgt.

Es versteht sich, dass die genauen Abmessungen der Halbleiter-Strahlungsquelle 10 in weiten Bereichen an die Erfordernisse anpassbar sind. Besonders günstig ist es, wenn die Gesamtbreite der Chipanordnung der erfindungsgemäßen Halbleiter-Strahlungsquelle 10, die Erstreckung von der Außenkante des Chips 18 zur Außenkante des Chips 16, oder die Erstreckung von der Außenkante des Chips 12 bis zur Außenkante des Chips 20, weniger als 8 mm, insbesondere weniger als 6 mm und bevorzugt etwa 5 mm beträgt, so dass einerseits eine zentrale Anordnung der LED-Chipanordnung auf dem Basiskörper möglich ist, aber andererseits dennoch eine günstige Wärmeableitung möglich ist. Bei dieser Dimensionierung kann der Basiskörper beispielsweise eine Breite von etwa 1,5 cm und eine Länge von etwa 2,5 cm aufweisen und in weiter unten liegenden Bereichen in an sich bekannter Weise mit Kühlrippen versehen sein.

Eine modifizierte Ausgestaltung einer erfindungsgemäßen Halbleiter-Strahlungsquelle 10 ist aus Fig. 3 ersichtlich. Dort sind ebenfalls fünf LED-Chips kreuzweise angeordnet, ähnlich wie es bei den Ausführungsformen gemäß Fig. 1 und 2 vorgesehen ist. Zwischen ihnen erstreckt sich eine Gitterstruktur 30 mit Reflektorelementen 24, deren Höhe praktisch der Höhe der LED-Chips entspricht. Unmittelbar hieran angrenzend ist eine Abdecklinse 40 vorgesehen. Unter unmittelbar angrenzend ist hier zu verstehen, dass die Abdecklinse 40 auf den Oberkanten der Reflektorelemente 24 aufliegen kann, oder einem ganz geringen Abstand von beispielsweise 0,1 bis 1 mm sich oberhalb der LED-Chips erstrecken kann.

Die Abdecklinse 40 ist über einen Abstandshalter 42 abgestützt. Der Abstandshalter 42 weist eine Innenschulter 44 auf, die sich genau zum Umfang der Abdecklinse 40 erstreckt, diese seitlich abstützt und umgreift.

Der Abstandshalter 42 ist hauptsächlich auf einer Printplatte 46 abgestützt, wobei im Bereich eines Zapfens 48 die Abstützung zusätzlich auf dem Basiskörper 22 erfolgt. Die Printplatte 46 erstreckt sich seitlich bis zu den äußeren LED-Chips 14 und 20 hin - abgesehen von dem Zapfen 48, der in Fig. 3 im Schnitt dargestellt ist - erstreckt sich jedoch noch weiter radial einwärts neben den Chips 14 und 20, nämlich in die Freiflächen 36a, 36b, 36c und 36d hinein, so dass Teile der Printplatte sich je zwischen den äußeren LED-Chips, also beispielsweise zwischen dem Chip 14 und dem Chip 16, erstrecken. Gerade dort, also im Bereich der Freiflächen 36a bis 36d, sind Anschlußflächen ausgebildet, die aus Fig. 3 nicht ersichtlich sind.

Die Kontaktierung erfolgt bevorzugt so, dass der Basiskörper 22 als Massekörper dient, während Leiterbahnen zu den Chips 12 bis 20 hingeführt sind, die sich oben auf der Printplatte 46 erstrecken und den Anschluß sicherstellen.

Oberhalb des Abstandshalters 46 erstreckt sich ein Reflektor 50, der in an sich bekannter Weise eine parabolische Oberfläche aufweist. Er schließt sich an die Vorderseite der Abdecklinse 40 an. Durch diese Zwischenschaltung ist er zusätzlich thermisch getrennt von den heißen LED-Chips 12 bis 20 und von dem ebenfalls recht warmen Basiskörper 22, so dass er nicht zur Eintrüben neigt, auch wenn preisgünstiges Kunststoffmaterial eingesetzt wird.

Von dem Reflektorelement etwas beabstandet erstreckt sich dieses überlappend eine Sammellinse 52, die an einer Innenschulter in dem Gehäuse 54 gelagert ist. Das Gehäuse 54 nimmt wiederum den Basiskörper 22 auf, so dass insofern eine feste räumliche Zuordnung zwischen dem Reflektor 50 und der Sammellinse 52 gegeben ist.

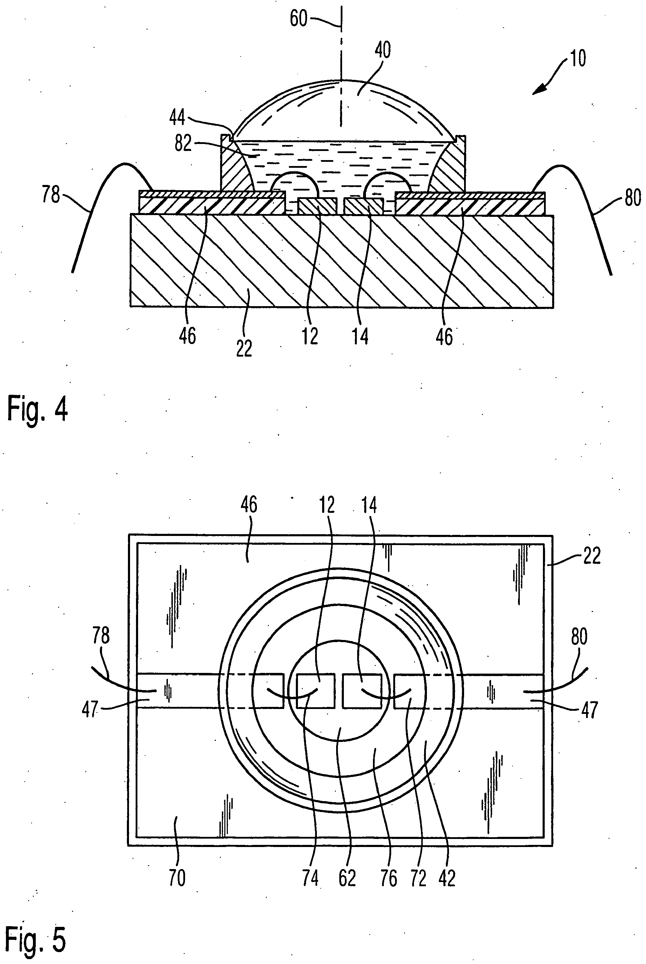

Eine modifizierte Ausgestaltung der erfindungsgemäßen Strahlungsquelle ist aus Fig. 4 ersichtlich. Bei dieser Lösung ist eine Mehrzahl von LED-Chips 12, 14 kompakt und zentral auf dem Basiskörper 22 angeordnet. Wie auch bei den Ausführungsformen gemäß Fig. 1 bis 3 sind die LED-Chips eng benachbart angeordnet, wobei höchstens ein Reflektorelement sich zwischen ihnen erstreckt und - in dem dargestellten Ausführungsbeispiel - kein Reflektorelement vorgesehen ist.

Erfindungsgemäß besonders günstig ist es, dass sich zwischen der optischen Achse 60 und den Chips keine Printplatte erstreckt, sondern dass insofern eine enge Anordnung vorgesehen ist, während sich seitlich eine Printplatte in den Bereich der LED-Chips hinein erstrecken kann. Bei der Ausführungsform gemäß den Fig. 4 und 5 ist die Printplatte 46 deutlich außerhalb der Chipanordnung vorgesehen und umgibt diese kreisringförmig, wie es aus Fig. 5 ersichtlich ist. Sie deckt auch den Basiskörper 22 praktisch auf seiner gesamten Oberfläche ab, so dass eine gute Warmedämmung nach vorne entsteht. Ausgenommen hiervon ist nur ein zentraler Chipbereich 62, der die Chips 12 und 14 aufnimmt. Auch wenn dieser kreisförmige Bereich in Fig. 5 recht großzügig dargestellt ist, versteht es sich, dass anstelle dessen auch eine engere Heranführung der Printplatte an die Chips günstig sein kann.

Wie aus Fig. 5 ersichtlich ist, erstrecken sich die Leiterbahnen 47 von Anschlußflächen 70, 72 für Bonddrähte 74, 76 nach außen, also zum Außenumfang des Basiskörpers 22 und sind dort über Anschlußdrähte 78, 80 verbunden.

Der Abstandshalter 42 für die Abdecklinse 40 erstreckt sich kreisringförmig (vgl. Fig. 5), wobei die Abdecklinse 40 wiederum in einer Innenschulter 44 aufgenommen ist. Zwischen der planen Rückseite der Abdecklinse 40 und dem Chipbereich ist ein Raum 82 geschlossen ausgebildet, der seitlich von dem ringförmigen Abstandshalter 42 begrenzt ist. Dieser Raum ist bevorzugt mit einer durchsichtigen Substanz wie Silikongel oder einer Vergussmasse, die gegebenenfalls Phosphorpartikel aufweisen kann.

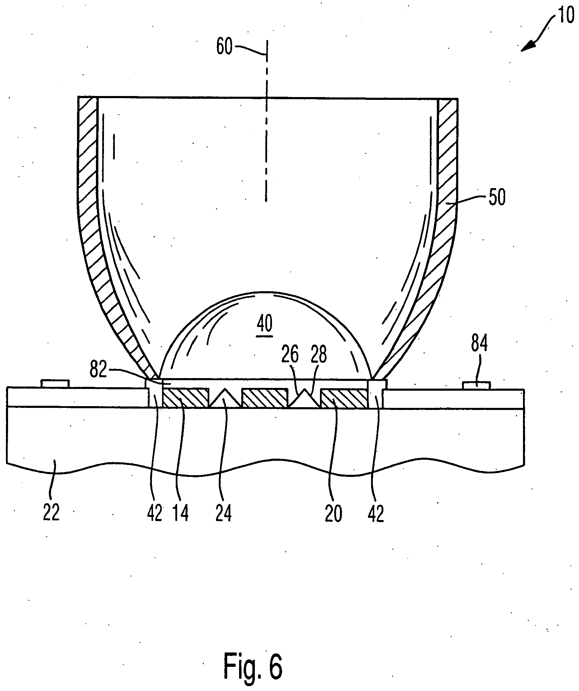

Eine weiter modifizierte Ausgestaltung der erfindungsgemäßen Strahlungsquelle 10 ist aus Fig. 6 ersichtlich. Gleiche Bezugszeichen weisen hier wie auch in den weiteren Figuren auf gleiche Teile hin. Diese Ausgestaltung zeichnet sich durch eine ebenfalls recht kompakte Ausführung aus, bei der die Led-Chips kreuz- oder sternförmig angeordnet sind, wobei sich zwischen den äußeren LED-Chips 14 und 20 und der optischen Achse 60 nichts chipfremdes - außer gegebenenfalls einem sehr kompakten Reflektorelement 24 - erstreckt. Die Reflektorelemente 24 sind wiederum dachförmig ausgebildet, so dass sie Reflexionsflächen 26 und 28 bieten und das seitlich austretende Licht nach vorne werfen.

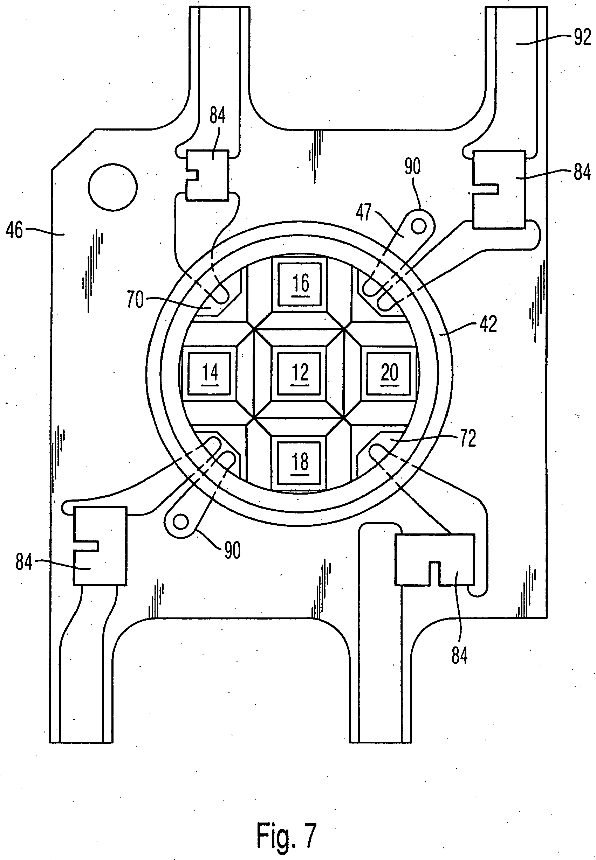

Aus Fig. 7, aber auch aus Fig. 6 ist ersichtlich, dass an die Leiterbahnen 47 je ein Vorwiderstand 84 angeschlossen ist, der gerade auch bei Parallelschaltung der LED-Chips dem Abgleich dienen kann. Dies ist besser aus Fig. 7 ersichtlich, wobei Fig. 7 insgesamt vier je über Laserabgleich abgeglichene Vorwiderstände 84 zeigt, die den vier äußeren LED-Chips 14 bis 12 zugeordnet sind. Bei dieser Lösung ist es vorgesehen, den Zentral-LED-Chip 12 mit einer anderen Wellenlänge und unabhängig zu betreiben, während die äußeren LED-Chips 14 bis 20 je parallel geschaltet sind und daher Vorwiderstände in ihren Leiterbahnen 47 aufweisen.

Die Printplatte 46 ist in dem dargestellten Ausführungsbeispiel, mit Durchkontaktierungen 90 versehen, die es erlauben, die Anschlußfahnen 92 von oben und von unten zu kontaktieren.

Wie aus Fig. 7 ersichtlich ist, erstrecken sich Anschlußflächen, beispielsweise die Anschlußflächen 70 und 72 von außen neben die äußeren LED-Chips 14 bis 20, während der Chipbereich 76 nach innen, also zur optischen Achse hin, frei von Leiterbahnen verbleibt.

Diese Lösung erlaubt es, trotz kompakter Anordnung die Leiterbahnen innerhalb des Abstandshalter 42 enden zu lassen, so dass Bonddrähte geschützt zu den Chip verlaufen können, aber dennoch eine gemeinsame Abdecklinse 40 - die aus Fig. 7 nicht ersichtlich ist - sich oberhalb aller Chips 12 bis 20 erstrecken kann.

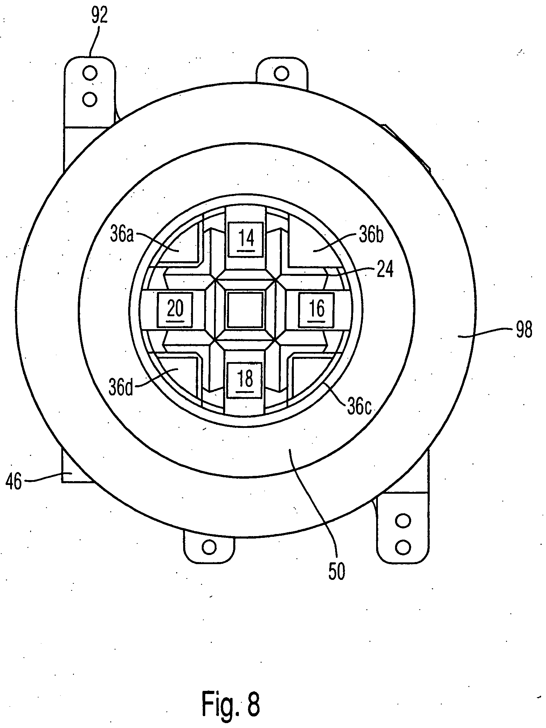

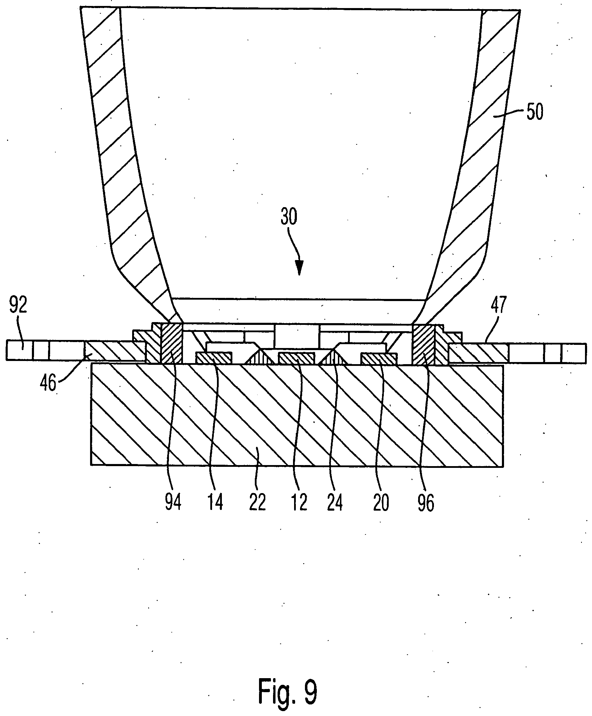

Eine weitere Ausführungsform ist aus Fig. 8 und 9 ersichtlich. Dort wie auch in den weiteren Figuren weisen gleiche oder ähnliche Bezugszeichen auf gleiche oder ähnliche Teil hin. Bei dieser Lösung sind wiederum fünf LED-Chips 12 bis 20 im Wesentlichen kreuzförmig angeordnet, so dass die Chips 14 bis 20 einem zentralen Chip 12 umgeben. Die Chips sind je von Reflektorelementen 24 umgeben, die sich zwischen und neben ihnen erstrecken und Teil eines Abstandshalter bilden, der einen Reflektor 50 vor dem LED-Chips abstützt.

In der Zeichnungsebene unterhalb des Reflektors 50 und wie es besser aus Fig. 9 ersichtlich ist, sind Strahlungsabsorber 94 und 96 vorgesehen, die sich zwischen den äußeren LED-Chips 14 und 20 einerseits und der Printplatte 46 erstrecken. Diese Lösung ist besonders günstig wenn es gilt, hoch energiereiche Strahlung abzufangen, ohne die Printplatte zu beeinträchtigen. Die Strahlungsabsorber 94 und 96 können als massive Körper auf dem Basiskörper 22 aufgebracht sein, beispielsweise über eine extrem dünne Klebeschicht, ähnlich wie auch die Chips selbst, so dass eine gute Wärmeableitung gewährleistet ist.

Die Strahlungsabsorber 94 und 96, von denen natürlich bei den weiteren LED-Chips 16 und 18 ebenfalls zwei entsprechende Strahlungsabsorber vorgesehen sind, können aus beliebigen geeigneten Material bestehen. In Frage kommen beispielsweise Kunststoffkörper, Aluminiumkörper, aber auch bevorzugt Keramikkörper, die auch dunkel eingefärbt sein können, um noch eine bessere Strahlungsabsorbtion zu gewährleisten.

In dem in Fig. 8 dargestellten Ausführungsbeispiel ist die Printplatte 46 zudem von einem Schutzring 98 abgedeckt, der ebenfalls dem besseren Schutz, insbesondere der Kalibrierwiderstände dient, denn durch eine zu starke Erwärmung der Kalibrierwiderstände kann die Kalibrierung beeinträchtigt werden.

Es versteht sich, dass der Schutzring 98 so dimensioniert ist, dass die Anschlussbahnen 92 frei bleiben, wobei der Schutzring bevorzugt mindestens auf seiner Unterseite elektrisch isolierend ausgestaltet ist.

Aus Fig. 9 ist ersichtlich, dass die LED-Chips 14, 12 und 20 je auch von dem Reflektorelement beabstandet angeordnet sind. Auch dies trägt dazu bei, die intensive Wärmeabgabe durch die LED-Chips nicht zu einer intensiven Wärmebeaufschlagung des Gitterreflektors 30, der aus Kunststoff mit verspiegelten Oberflächen bestehen kann, werden zu lassen.

Auch wenn bei der Darstellung gemäß Fig. 9 keine Linse entsprechend der Abdecklinse 40 dargestellt ist, versteht es sich, dass diese in beliebiger geeigneter Weise dort vorgesehen sein kann.

## Patentansprüche

1. Halbleiter-Strahlungsquelle. mit einem Basiskorper (22), auf dem mindestens zwei LED-Chips (Light Emitting Diode-Chips) (12, 14. 16, 18. 20) unmittelbar gelagert und in Wärmeleitverbindung auf dem Basiskörper (22) angebracht sind, wobei mindestens eine Printplatte (46) auf dem Basiskörper (22) gelagert ist, die sich von den zentral angeordnete LED-Chips (12, 14, 16, 18, 20) nach außen zum Umfangsbereich des Basiskörpers (22) erstreckt, wobei
die LED-Chips (12, 14, 16, 18, 20) in dem zentralen Bereich des Basiskörpers (22) in dichter Packung und einander benachbart ohne Printplatte (46) zwischen ihnen angeordnet sind,
die Printplatte (46) im Wesentlichen bis zu einem zentralen, kreisringförmigen Chipbereich an die LED-Chips (12, 14. 16. 18, 20) herangeführt ist, **dadurch gekennzeichnet, dass**
die Printplatte (46) bis neben die Chips verläuft und in Freiflächen (36a, 36b, 36c, 36d) hineinragt, die sich seitlich neben den LED-Chips (12, 14, 16, 18. 20) erstrecken, so dass im Wesentlichen die Printplatte die gesamte Fläche des Basiskörpers (22), abgesehen von der Fläche, die von den LED-Chips eingenommen wird, abdeckt.

2. Strahlungsquelle nach Anspruch 1.
**dadurch gekennzechnet,** dass ein erster LED-Chip (12) in einer optischen Achse (60) angeordnet ist und eine Mehrzahl von mehreren LED-Chips (14, 16, 18, 20), insbesondere symmetrisch zueinander und den LED-Chip (12) nach der Art eines Kreuzes oder Sternes umgebend, radial außerhalb des ersten LED-Chips (12) angeordnet sind.

3. Strahlungsquelle nach Anspruch 1 oder 2.
**dadurch gekennzeichnet, dass** vier weitere LED Chips (14,16, 18, 20) den ersten LED-Chip (12) umgeben.

4. Strahlungsquelle nach einem der vorhergehenden Ansprüche,
**dadurch gekennzeichnet, dass** die LED-Chips (12, 14, 16, 18, 20) und die Printplatte (46) im Wesentlichen die gleiche Höhe aufweisen.

5. Strahlungsquelle nach einem der vorhergehenden Ansprüche,
**dadurch gekenntzeichnet,** dass über Bondverbindungen Anschlussflächen (70, 72) von Leiterbahnen (47) der Printplatte (46) mit den LED-Chips (12, 14, 16, 18, 20) verbunden sind.

6. Strahlungsquelle nach einem der vorhergehenden Ansprüche,
**dadurch gekennzeichnet, dass** die LED-Chips (12, 14, 16, 18, 20), ggf. über einen thermisch leitfähigen Kleber, unmittelbar auf dem Basiskörper (22) gelagert sind und die Printplatte (46) auf dem Basiskörper (22) aufgeklebt ist.

7. Strahlungsquelle nach einem der vorhergehenden Ansprüche,
**dadurch gekennzeichnet, dass** die Printplatte (46) eine Epoxidharzbasis aufweist und wenigstens auf einer Seite mindestens eine Leiterbahn (47) aufweist und mit Kupfer beschichtet sowie durchkontaktiert ist.

8. Strahlungsquelle nach einem der vorhergehenden Ansprüche,
**dadurch gekennzeichnet, dass** die LED-Chips (12, 14, 16, 18, 20) auf einem zentralen Vorsprung des Basiskörpers (22) angeordnet sind, dessen Höhe im Wesentlichen der Höhe der Printplatte (46) entspricht

9. Strahlungsquelle nach einem der vorhergehenden Ansprüche,
**dadurch gekenntzeichnet,** dass mindestens zwischen zwei einander benachbarten LED-Chips (12. 14, 16, 18, 20) ein Reflektorelement (24) angeordnet ist, das sich an dem Basiskörper (22), und/oder der Printplatte (46) und/oder den LED-Chips (12, 14, 16, 18, 20), besonders bevorzugt auch an dem Basiskörper (22), abstützt.

10. Strahlungsquelle nach einem der vorhergehenden Ansprüche,
**dadurch gekenntzeichnet,** dass ein sich zwischen zwei LED-Chips erstreckendes Reflektorelement (24) zwei im Wesentlichen schräg verlaufende Retlexionsflächen (26, 28) aufweist, wobei jede Reflexionsfläche aus dem benachbarten LED-Chip stammende Strahlung reflektiert.

11. Strahlungsquelle nach einem der vorhergehenden Anspruche,
**dadurch gekenntzeichnet,** dass die Reflexionsflächen (26, 28) in Richtung der optischen Achse (60) betrachtet sich im Wesentlichen entsprechend der Höhe der Printplatte (22) erstrecken oder die Printplatte (22) überragen.

12. Strahlungsquelle nach einem der vorhergehenden Ansprüche,
**dadurch gekennzeichnet, dass** Reflexionsflächen (26, 28) leicht konkav oder parabolisch ausgestaltet sind und dass das Reflektorelement (24) einen im Wesentlichen dreieckigen Querschnitt, besonders bevorzugt im Wesentlichen eines gleichschenkligen Dreiecks, aufweist.

13. Strahlungsquelle nach einem der vorhergehenden Ansprüche,
**dadurch gekenntzeichnet,** dass mehrere Reflektorelemente (24) unter Bildung eines Gitterreflektors (30) miteinander verbunden sind

14. Strahlungsquelle nach einem der vorhergehenden Ansprüche,
**dadurch gekennzeichnet dass** die LED-Chips (12, 14, 16, 18, 20) in dem Gitterreflektor (30) aufgenommen sind und dass sich der Gitterreflektor an dem Basiskörper (22) und/oder der Printplatte (46) und/oder den LED-Chips (12, 14, 16, 18, 20) abstützt.

15. Strahlungsquelle nach einem der vorhergehenden Ansprüche,
**dadurch gekennzeichnet, dass** sich Reflektorelemente (24) zwischen den seitlichen Freiflächen (34, 36) und den LED-Chips erstrecken und dort insbesondere die LED-Chips (12, 14, 16, 18, 20) abstützen.

16. Strahlungsquelle nach einem der vorhergehenden Ansprüche,
**dadurch gekennzeichnet, dass** sich zwischen LED-Chips (12, 14, 16, 18, 20), besonders bevorzugt zwischen äußeren LED-Chips (14, 16, 18, 20), und der Printplatte (46) Strahlungsabsorber (94, 96) erstrecken, die mit dem Basiskörper (22) in Wärmeleitverbindungen miteinander verbunden sind

17. Strahlungsquelle nach Anspruch 16,
**dadurch gekennzeichnet, dass** die Strahlungsabsorber zugleich wärmedämmend ausgebildet sind und insbesondere aus Keramik bestehen

18. Strahlungsquelle nach einem der Ansprüche 16 oder 17
**dadurch gekennzeichnet dass** die Strahlungsabsorber sich mindestens über die Breite der LED-Chips (14, 16, 18, 20) erstrecken und eine größere Höhe als die LED-Chips (14, 16, 18, 20) aufweisen, bevorzugt etwa die 1.5 bis 5-fache Hohe und besonders bevorzugt etwa die zweifache Höhe der LED-Chips (14, 16, 18, 20).

19. Strahlungsquelle nach einem der vorhergehenden Ansprüche,
**dadurch gekennzeichnet, dass** eine Abdecklinse (40) im Strahlengang nach den LED-Chips (12, 14, 16, 18, 20) angeordnet ist und ein Abstandshalter (42) für diese im Wesentlichen rohr- oder ringförmig ausgebildet ist, und dass der Abstandshalter (42) mindestens teilweise auf der Printplatte (46) und oder dem Basiskörper (22) abgestützt ist.

20. Strahlungsquelle nach einem der vorhergehenden Ansprüche,
**dadurch gekennzeichnet, dass** mindestens eine Leiterbahn der Printplatte (46) unter einem Abstandshalter (42) hindurch verläuft und von außerhalb des Abstandshalters (42) nach innerhalb des Abstandshalters verläuft.

21. Strahlungsquelle nach einem der Ansprüche 18 bis 20.
**dadurch gekennzechnet, dass** sich zwischen den LED-Chips (12, 14, 16, 18, 20) dem Abstandshalter (42) und der Abdecklinse (40) ein geschlossener Raum (82) erstreckt, der eine durchsichtige oder durchscheinende, flüssige oder gelförmige Substanz, besonders bevorzugt Silikongel oder eine Vergußmasse, aufweist.

22. Strahlungsquelle nach Anspruch 21,
**dadurch gekennzeichnet, dass** die Substanz Phosphorpartikel aufweist.

23. Strahlungsquelle nach einem der vorhergehenden Ansprüche,
**dadurch gekennzeichnet, dass** im Strahlengang nach einer Abdecklinse (40) eine Sammellinse (52) angeordnet ist, deren Durchmesser größer als der Durchmesser der Abdecklinse (40) ist.

24. Strahlungsquelle nach einem der vorhergehenden Ansprüche,
**dadurch gekennzeichnet, dass** von den LED-Chips (12, 14, 16, 18, 20) beabstandet vor diesen, also im Strahlengang nach diesen, und/oder auch im Strahlengang nach einer Abdecklinse (40), ein Reflektor (50) angeordnet ist.

25. Strahlungsquelle nach einem der vorhergehenden Ansprüche,
**dadurch gekennzeichnet dass** im Strahlengang nach dem Reflektor (50) ein Lichtleiter angeordnet ist

26. Strahlungsquelle nach einem der vorhergehenden Ansprüche,
**dadurch gekennzeichnet, dass** auf der Printplatte (46), außerhalb des Abstandshalters (42) abgleichbare Vorwiderstände (84) angeordnet sind die für die für die Abgleichung frei zugänglich sind.

27. Strahlungsquelle nach einem der vorhergehenden Ansprüche,
**dadurch gekennzeichnet, dass** der erste LED Chip (12) und die weiteren LED-Chips (14, 16, 18, 20) Licht mit unterschiedlichen Wellenlängen ausstrahlen, besonders bevorzugt einerseits mit 400 bis 430 nm und andererseits mit 450 bis 480 nm.

28. Strahlungsquelle nach einem der vorhergehenden Ansprüche,
**dadurch gekennzeichnet, dass** der erste Chip (12) und die weiteren Chips (14, 16, 18, 20) gleichzeitig oder zu unterschiedlichen Zeitpunkten einschaltbar und ausschaltbar sind.

29. Strahlungsquelle nach einem der vorhergehenden Ansprüche,
**dadurch gekennzeichnet, dass** der erste LED-Chip (1 2) Licht mit 400 bis 430 nm und die weiteren LED-Chips (14, 16, 18, 20) Licht mit 450 bis 480 nm ausstrahlen.

30. Lichthärtgerät zum Aushärten von lichtpolymerisierbaren Dentalmassen, welches wenigstens eine Halbleiter-Strahlungsquelle nach einem der Ansprüche 1 bis 29 aufweist.

31. Lichthärtgerät nach Anspruch 30.
**dadurch gekennzeichnet, dass** es als Handgerät mit einem Griff ausgebildet ist.

32. Lichthärtgerät nach Anspruch 30 oder 31,
**dadurch gekennzeichnet, dass** das Lichthartgerät ein Gehäuse (54) aufweist, an dem die Sammellinse (52) abgestützt ist.

## Claims

1. A semiconductor radiation source, comprising a base body (22) on which at least two LED chips (Light Emitting Diode Chips) (12, 14, 16, 18, 20) are directly mounted and attached to the base body (22) using a thermally conductive connection, wherein at least one printed circuit board (46) is mounted on the base body (22) which extends from the centrally arranged LED chips (12, 14, 16, 18, 20) towards the outside to the peripheral region of the base body (22), wherein
the LED chips (12, 14, 16, 18, 20) are arranged in the central region of the base body (22) in a dense package such that they are adjacent to one another, that Is to say without the printed circuit board (46) between them,
the printed circuit board (46) has been brought close to the LED chips (12, 14, 16, 18,20) substantially up to a central, annular chip region,
**characterized in that**
the printed circuit board (46) runs beside the chips and projects into free areas (36a, 36b, 36c, 36d) which extend laterally beside the LED chips (12, 14, 16, 18, 20), such that the printed circuit board substantially covers the entire area of the base body (22), apart from the area which is occupied by the LED chips.

2. The radiation source as claimed in claim 1, **characterized in that** a first LED chip (12) is arranged on an optical axis (60) and a plurality of several LED chips (14, 16, 18, 20) are arranged radially outside the first LED chip (12) partlcularly symmetrically with respect to one another and such that they surround the LED chip (12) in the manner of a cross or star.

3. The radiation source as claimed in claim 1 or 2, **characterized in that** four further LED chips (14, 16, 18, 20) surround the first LED chip (12).

4. The radiation source as claimed in any of the preceding claims, **characterized in that** the LED chips (12,1 4, 16, 18, 20) and the printed circuit board (46) substantially have the same height.

5. The radiation source as claimed in any of the preceding claims, **characterized In that** connecting areas (70, 72) of conductor tracks (47) of the printed circuit board (46) are connected to the LED chips (12, 14, 16, 18, 20) via bonding connections.

6. The radiation source as claimed In any of the preceding claims, **characterized In that** the LED chips (12, 14, 16, 18, 20) are directly mounted on the base body (22), if appropriate using a thermally conductive adhesive, and the printed circuit board (46) is adhesively bonded to the base body (22).

7. The radiation source as claimed in any of the preceding claims, **characterized in that** the printed circuit board (46) has an epoxy resin base, has at least one conductor track (47) at least on one side and is coated with copper and connected by through-plating.

8. The radiation source as claimed in any of the preceding claims, **characterized In that** the LED chips (12, 14, 16, 18, 20) are arranged on a central protrusion of the base body (22) the height of which corresponds substantially to the height of the printed circuit board (46).

9. The radiation source as claimed in any of the preceding claims, **characterized in that** a reflector element (24) is arranged at least between two mutually adjacent LED chips (12, 14, 16, 18, 20), said reflector element (24) being supported on the base body (22) and/or on the printed circuit board (46) and/or on the LED chips (12, 14, 16, 18, 20), and particularly preferably on the base body (22).

10. The radiation source as claimed In any of the preceding claims, **characterized in that** a reflector element (24) which extends between two LED chips has two reflecting areas (26, 28) which run substantially obliquely, each reflecting area reflecting radiation emanating from the adjacent LED chip.

11. The radiation source as claimed in any of the preceding claims, **characterized in that** the reflecting areas (26, 28), when viewed in the direction of the optical axis (60), substantially extend in a manner corresponding to the height of the printed circuit board (22) or project beyond the printed circuit board (46).

12. The radiation source as claimed in any of the preceding claims, **characterized in that** the reflecting areas (26, 28) are configured slightly concavely or parabolically and that the reflector element (24) has a substantially triangular cross section, particularly preferably substantially of an equal-sided triangle.

13. The radiation source as claimed in any of the preceding claims, **characterized in that** several reflector elements (24) are connected to one another so as to form a grating reflector (30).

14. The radiation source as claimed in any of the preceding claims, **characterized in that** the LED chips (12, 14, 16, 18, 20) are received within the grating reflector (30) and that the grating reflector Is supported on the base body (22) and/or the printed circuit board (46) and/or the LED chips (12, 14, 16, 18, 20).

15. The radiation source as claimed In any of the preceding claims, **characterized in that** the reflector elements (24) extend between the lateral free areas (34, 36) and the LED chips and support in particular the LED chips (12, 14, 16, 18, 20) thereat.

16. The radiation source as claimed in any of the preceding claims, **characterized in that** radiation absorbers (94, 96) which are connected to the base body (22) using thermally conductive connections extend between the LED chips (12, 14, 16, 18, 20), particularly preferably between outer LED chips (14, 16, 18, 20), and the printed circuit board (46).

17. The radiation source as claimed In claim 16, **characterized In that** the radiation absorbers are simultaneously of heat-insulating design and are composed of ceramic, in particular.

18. The radiation source as claimed in claim 16 or 17, **characterized in that** the radiation absorbers extend at least over the width of the LED chips (14, 16, 18, 20) and have a greater height than the LED chips (14, 16, 18, 20), preferably approximately 1.5 to 5 times the height, and particularly preferably approximately twice the height, of the LED chips (14, 16, 18, 20).

19. The radiation source as claimed in any of the preceding claims, **characterized in that** a cover lens (40) Is arranged in the beam path downstream of the LED chips (12, 14, 16, 18, 20) and a spacer (42) for the lens is of essentially tubular or annular design, and that the spacer (42) is at least partially supported on the printed circuit board (46) and/or the base body (22).

20. The radiation source as claimed in any of the preceding claims, **characterized In that** at least one conductor track of the printed circuit board (46) runs through under a spacer (42) and runs from outside of the spacer (42) to the inside of the spacer.

21. The radiation source as claimed in any of the claims 18 to 20, **characterized in that** a closed space (82) which has a transparent or translucent, liquid or gelatinous substance, particularly preferable silicone gel or a potting compound, extends between the LED chips (12, 14, 16, 18, 20), the spacer (42) and the cover lens (40).

22. The radiation source as claimed in claim 21, **characterized in that** the substance has phosphorus particles.

23. The radiation source as claimed in any of the preceding claims, **characterized in that** a converging lens (52), whose diameter Is larger than the diameter of the cover lens (40), is arranged in the beam path downstream of the cover lens (40).

24. The radiation source as claimed in any of the preceding claims, **characterized in that** a reflector (50) Is arranged at a distance from the LED chips (12, 14, 16, 18, 20) In front of the latter, that is to say downstream of the latter in the beam path, and/or is also arranged downstream of a cover lens (40) in the beam path.

25. The radiation source as claimed in any of the preceding claims, **characterized in that** a light guide is arranged in the beam path downstream of the reflector (50).

26. The radiation source as claimed in any of the preceding claims, **characterized In that** adjustable series resistors (84) which are freely accessible for adjustment are arranged on the printed circuit board (46) outside the spacer (42).

27. The radiation source as claimed in any of the preceding claims, **characterized in that** the first LED chip (12) and the further LED chips (14, 16, 18, 20) emit light at different wavelengths, particularly preferable at 400 to 430 nm, on the one hand, and at 450 to 480 nm, on the other hand.

28. The radiation source as claimed In any of the preceding claims, **characterized in that** the first LED chip (12) and the further chips (14, 16, 18, 20) can be switched on and off at the same time or at different times.

29. The radiation source as claimed in any of the preceding claims, **characterized in that** the first LED chip (12) emits light at 400 to 430 nm and the further LED chips (14, 16, 18, 20) emit light at 450 to 480 nm.

30. A light curing device for curing light-polymerizable dental materials, comprising at least one semiconductor radiation source as claimed in any of the claims 1 to 29.

31. The light curing device as claimed in claim 30, **characterized in that** it is configured as a hand-held device comprising a handle.

32. The light curing device as claimed in claim 30 or 31, **characterized in that** the light curing device has a housing (54) on which the converging lens (52) Is supported.

## Revendications

1. Source de rayonnement à semi-conducteurs avec un corps de base (22), sur lequel au moins deux puces LED (Light Emitting Diode Chips) (12, 14, 16, 18, 20) sont montées directement et sont appliquées sur le corps de base (22) en liaison de conduction thermique, où au moins une carte de circuit imprimé (46) est montée sur le corps de base (22), qui s'étend à partir des puces LED (12, 14, 16,18, 20) disposées de façon centrale vers l'extérieur vers la zone périphérique du corps de base (22) où les puces LED (12, 14, 16, 18, 20) sont disposées dans la zone centrale du corps de base (22) en tassement dense adjacentes les unes aux autres sans carte de circuit imprimé (46) entre elles, la carte de circuit imprimé (46) est essentiellement conduite jusqu'à une zone central de puces, de forme annulaire, aux puces LED (12, 14, 16, 18, 20), **caractérisée en ce que** la carte de circuit imprimé (46) passe à côté des puces et fait saillie dans des espaces libres (36 a, 36 b, 36C, 36D), qui s'étendent latéralement à côté des puces LED (12, 14, 16, 18, 20), de manière que la carte de circuit imprimé (46) couvre essentiellement la superficie totale du corps de base (22), à l'exception de la zone occupée par les puces LED.

2. Source de rayonnement selon la revendication 1, en ce qu'une première puce LED (12) est disposée dans un axe optique (60) et une majorité de plusieurs puces LED (14, 16, 18, 20) sont disposées radialement à l'extérieur de la première des puces LED (12), en particulier symétriquement les unes par rapport aux autres et entourant la puce LED (12) à la manière d'une croix ou d'une étoile.

3. Source de rayonnement selon la revendication 1 ou 2, **caractérisée en ce que** quatre, puces LED supplémentaires (14, 16, 18, 20) entourent la première puce LED (12).

4. Source de rayonnement selon l'une des revendications précédentes, en ce que les puces LED (12, 14, 16, 18, 20) et la carte de circuit imprimé (46) présentent essentiellement la même hauteur.

5. Source de rayonnement selon l'une des revendications précédentes, **caractérisée en ce que** des surfaces de connexion (70, 72) sont reliées par des pistes conductrices (47) de la carte de circuit imprimé (46) aux puces LED (12, 14, 16, 18, 20) par le bais de liaisons par bonding.

6. Source de rayonnement selon l'une des revendications précédentes, **caractérisée en ce que** les puces LED (12, 14, 16, 18, 20) sont montées le cas échéant par un adhésif thermoconducteur directement sur le corps de base (22) et la carte de circuit imprimé (46) est collée sur le corps de base (22).

7. Source de rayonnement selon l'une des revendications précédentes, **caractérisée en ce que** la carte de circuit imprimé (46) présente une base de résine époxy et présente au moins une piste conductrice (47) sur au moins une face et est recouverte de cuivre et à trous métallisées.

8. Source de rayonnement selon l'une des revendications précédentes, **caractérisée en ce que** les puces LED (12, 14, 16, 18, 20) sont disposées sur une projection centrale du corps de base (22) dont la hauteur correspond à la hauteur de la carte de circuit imprimé (46).

9. Source de rayonnement selon l'une des revendications précédentes, **caractérisée en ce qu'**un élément réflecteur (24) est disposé au moins entre deux morceaux adjacents de LED (12, 14, 16, 18, 20), qui s'appuie sur le corps de base (22) et/ou la carte de circuit imprimé (46) et/ou les puces LED (12, 14, 16, 18, 20), de façon particulièrement préférée aussi sur le corps de base (22).

10. Source de rayonnement selon l'une des revendications précédentes, **caractérisée en ce qu'**un élément réflecteur (24) passant entre deux puces LED présente deux surfaces réfléchissantes (26, 28) essentiellement inclinées, où chaque surface réfléchissante réfléchit le rayonnement provenant de la puce LED adjacente.

11. Source de rayonnement selon l'une des revendications précédentes, **caractérisée en ce que** les surfaces réfléchissantes (26, 28) s'étendent dans le sens de l'axe optique (60) essentiellement en fonction de la hauteur de la carte de circuit imprimé (22) ou dépassent la carte de circuit imprimé (22).

12. Source de rayonnement selon l'une des revendications précédentes, **caractérisée en ce que** les surfaces réfléchissantes (26, 28) sont conçus légèrement concave ou parabolique ou et que l'élément réflecteur (24) présente une section transversale essentiellement triangulaire, de façon particulièrement préféré un triangle isocèle.

13. Source de rayonnement selon l'une des revendications précédentes, **caractérisée en ce que** plusieurs éléments réflecteurs (24) sont reliés entre eux, formant un réflecteur à réseau (30).

14. Source de rayonnement selon une des revendications précédentes, **caractérisée en ce que** les puces LED (12, 14,16, 18, 20) sont accueillies dans le réflecteur à réseau (30) et que le réflecteur à réseau s'appuie sur le corps de base (22) et/ou la carte de circuit imprimé (46) et/ou les puces LED (12, 14, 16, 18, 20).

15. Source de rayonnement selon l'une des revendications précédentes, **caractérisée en ce que** des éléments réflecteurs (24) s'étendent entre les espaces libres (34, 36) latérales et les puces LED et en particulier les puces LED (12, 14,16, 18, 20) s'y appuient.

16. Source de rayonnement selon l'une des revendications précédentes **caractérisée en ce que**, des absorbeurs de rayonnement (94,96) s'étendent entre les puces LED (12, 14, 16, 18, 20), de façon particulièrement préférée entre les puces LED externes (t4, 16, 18, 20), et la carte de circuit imprimé (46), qui sont reliés avec le corps de base (22) en liaison de conduction thermique.

17. Source de rayonnement selon la revendication 16, **caractérisée en ce que** les amortisseurs de rayonnement sont conçus en même temps calorifuge et sont en particulier en céramique.

18. Source de rayonnement selon l'une des revendications 16 ou 17 **caractérisée en ce que** les absorbeurs de rayonnement s'étendent au moins sur la largeur des puces LED (14, 16, 18, 20) et présentent une hauteur supérieure là celle des puces LED (14,16, 18, 20) de préférence de 1,5 à 5 fois la hauteur et de façon particulièrement préférée environ deux fois la hauteur des puces LED (14, 16, 18, 20).

19. Source de rayonnement selon l'une des revendications précédentes, **caractérisée en ce qu'**une lentille de recouvrement (40) est disposée dans le trajet des rayons après les puces LED (12, 14, 16, 18, 20) et qu'un écarteur (42) pour celle-ci est disposé est formé essentiellement tubulaire ou annulaire et que l'écarteur (42) s'appuie au moins partiellement sur la carte de circuit imprimé (46) ou le corps de base (22).

20. Source de rayonnement selon l'une des revendications précédentes, **caractérisée en ce qu'**au moins une piste conductrice de la carte de circuit imprimé (46) parcourt sous un écarteur (42) et passe de l'extérieur vers l'intérieur de l'écarteur.

21. Source de rayonnement selon l'une des revendications 18 à 20, **caractérisée en ce qu'**un espace fermé (82) s'étend entre les puces LED (12, 14, 16, 18, 20), la lentille de recouvrement (40) et l'écarteur (42), qui comprend un liquide transparent ou translucide, ou une substance gélatineuse, notamment un gel de silicone ou une masse de scellement.

22. Source de rayonnement selon la revendication 21, **caractérisée en ce que** la substance présente des particules de phosphore.

23. Source de rayonnement selon l'une des revendications précédentes, **caractérisée en ce qu'**une lentille convexe (52) est disposée après la lentille de recouvrement (40) dans le trajet des rayons, dont le diamètre est supérieur au diamètre de la lentille de recouvrement.

24. Source de rayonnement selon l'une des revendications précédentes, **caractérisée en ce qu'**un réflecteur (50) est disposé à une certaine distance des puces LED (12, 14, 16, 18, 20) devant celles-ci, donc dans le trajet des rayons après celles-ci et/ou aussi dans le trajet des rayons après une lentille de recouvrement (40).

25. Source de rayonnement selon l'une des revendications précédentes, **caractérisée en ce qu'**un guide de lumière est disposé dans le trajet des rayons après le réflecteur (50).

26. Source de rayonnement selon l'une des revendications précédentes, **caractérisée en ce que** des résistances série réglables (84) sont classées sur la carte de circuit imprimé (46) à l'extérieur de l'écarteur (42), qui sont accessibles pour leur réglage.

27. Source de rayonnement selon l'une des revendications précédentes, **caractérisée en ce que** la première puce LED (12) et les autres puces (14, 16, 18, 20), émettent de la lumière avec différentes longueurs d'ondes de façon particulièrement préférée avec 400 à 430 nm d'une part et 450 à 480 nm d'autre part.

28. Source de rayonnement selon l'une des revendications précédentes, **caractérisée en ce que** la première puce (12) et les autres puces (14, 16, 18, 20) peuvent être activées ou désactivées simultanément ou à des moments différents.

29. Source de rayonnement selon l'une des revendications précédentes, **caractérisée en ce que** la première puce LED (12) émet de la lumière avec 400 à 430 nm et les autres puces LED (14, 16, 18, 20) émettent de la lumière avec 450 à 480 nm .

30. Appareil de photopolymérisation pour le durcissement de masses dentaires photopolymérisables, qui présente au moins une source de rayonnement à semi-conducteurs selon l'une des revendications 1 à 29.

31. Appareil de photopolymérisation selon la revendication 30, **caractérisé en ce qu'**il est formé comme appareil portable avec un grill.

32. Appareil de photopolymérisation selon la revendication 30 ou 31, **caractérisé en ce que** l'appareil de photopolymérisation présente un boîtier (54), sur lequel s'appuie la lentille convexe (52).
